# EUROPÄISCHE PATENTSCHRIFT

(11) **EP 1 285 836 B1**
(45) Veröffentlichungstag und Bekanntmachung des Hinweises auf die Patenterteilung: **07.06.2006**
(21) Anmeldenummer: 02017780.4
(22) Anmeldetag: 12.08.2002
(51) Int. Cl.: B60T 15/02

(54) **Pneumatische Funktionseinheit für Drucklufttbremsen**
Pneumatically operated functional unit for compressed-air brakes
Unité fonctionnelle pneumatique pour freins à air comprimé

(30) Priorität: 13.08.2001 DE 10139772
(43) Veröffentlichungstag der Anmeldung: 26.02.2003
(73) Patentinhaber: KNORR-BREMSE Systeme für Schienenfahrzeuge GmbH, 80809 München (DE)
(72) Erfinder: Heller, Martin, 85716 Unterschleissheim (DE); Wenk, Benno, 85283 Wolnzach (DE); Sonntag, Stefan, 82024 Taufkirchen (DE)

(56) Entgegenhaltungen:
- FR-A- 1 442 389
- FR-A- 1 540 693
- GB-A- 1 453 715
- US-A- 4 017 125

## Beschreibung

Die Erfindung betrifft eine pneumatische Funktionseinheit für Druckluftbremsen gemäß dem Oberbegriff des Anspruches 1.

Pneumatische Funktionseinheiten für Druckluftbremsen, insbesondere von Schienenfahrzeugen, sind Vorrichtungen, die mit ihren Wirkungsräumen in Verbindung stehen und die Aufgabe haben, den Druck in diesen Wirkungsräumen zu steuern oder zu regeln oder die Wirkungsräume untereinander zu verbinden oder zu trennen oder den Druckluft-Durchfluss über die Verbindung zu beeinflussen.

Sie enthalten dazu Ventile, welche Luftwege zu den Wirkungsräumen öffnen und schließen. Diese Ventile werden von Kolben bewegt, welche durch Drücke und durch Druckfedern belastet sind, so dass es zum Öffnen von Ventilen kommt, wenn die Kräfte an den Kolben im Ungleichgewicht sind. Die genannten Bauteile sind in Gehäuse eingebaut, welche Anschlüsse zu den Wirkungsräumen aufweisen.

Insbesondere bei indirekt wirkenden Druckluftbremsen für Züge sind Funktionseinheiten mit nicht linearen Funktionen bekannt, die als Steuerventile bezeichnet werden. Sie bestehen aus einer Vielzahl von Ventilen und Kolben, welche sich gegenseitig beeinflussen und das Zusammenwirken mehrerer Wirkungsräume steuern.

Das Dokument FR-A-1 540 693 offenbart eine Funktionseinheit für Druckluftbremsen mit den Merkmalen des Oberbegriffs des Anspruchs 1.

Da die Funktionseinheiten entsprechend ihrer Aufgabe eine unterschiedliche Anzahl von Kolben und Ventilen in einer Funktionseinheit beinhalten können, unterscheiden sie sich untereinander in ihrem Aufbau. Die Gehäuse der bekannten Steuerventile sind deshalb räumliche Gebilde, in welche die Ventile, Kolben, Druckfedern und anderer Bauteile von mehreren Seiten eingebaut werden.

Hierdurch ergibt sich der Nachteil, dass die Gehäuse komplizierte und spezielle Gussteile sind. Auch die einzubauenden Ventile und Kolben sind spezielle Konstruktionen mit einem geringen Standardisierungsgrad. Die Möglichkeit, mit diesen Elementen auf wechselnde Anforderungen zu reagieren, ist gering. Weiterhin ergibt sich der Nachteil, dass die Montage der konventionell aufgebauten Steuerventile sehr aufwendig ist, weil eine Vielzahl von luftdichten Schraub- und Pressverbindungen hergestellt werden muss. Ein zusätzlicher Nachteil ist das große Gewicht und der große Platzbedarf.

Der Erfindung liegt die Aufgabe zugrunde, eine pneumatische Funktionseinheit darzustellen, die aufgrund ihres einfachen Aufbaues zum einen eine kostengesenkte Montagetechnologie ermöglicht und zum anderen durch einen modularen Aufbau auch bei unterschiedlichem Baugruppenumfang die Verwendung möglichst vieler gleicher oder ähnlicher Teile zulässt.

Erfindungsgemäß wird diese Aufgabe durch die Merkmale des Hauptanspruches 1 gelöst. Die abhängigen Unteransprüche beschreiben besonders vorteilhafte Ausführungsformen.

Die Erfindung sieht die Ausbildung eines ursprünglich komplizierten dreidimensionalen Gebildes in nunmehr einfacher, axialer und ohne unnötige luftdichte Schraub- und Pressverbindungen ausgeführter Form vor.

Im Sinne der Erfindung umfasst die pneumatische Funktionseinheit ein Gehäuse mit wenigstens einem äußeren Druckluftanschluss. In dem Gehäuse ist wenigstens ein Kolben, eine Kolbenstange, ein Ventilkörper und ein Ventilsitz angeordnet. Dabei liegt der Erfindung die Idee zugrunde, einen oder mehrere Zylinderkörper in das Gehäuse einzupassen. Man kann dabei den Zylinderkörper verschiedenartig ausbilden, so dass er entweder einen Kolben mit der zugehörigen Kolbenstange aufnehmen kann, oder so ausgestaltet ist, dass in ihm ein Ventilkörper geführt werden kann. Dabei kann der Zylinderkörper so ausgestaltet sein, dass er durch seine Form direkt einen Ventilsitz ausbildet, oder ein Ventilsitz kann in ihn gesondert eingebracht werden.

Um den Wirkraum in einem Zylinderkörper mit dem äußeren Druckluftanschluss zu verbinden, sind im Zylinderkörper eine oder mehrere Querverbindungen aus seinem Inneren zu seiner Mantelfläche ausgebildet. Diese Querverbindungen sind über luftführende Verbindungen im Gehäuse mit dem jeweiligen äußeren Anschluss verbunden. Auch die Verbindung verschiedener Querverbindungen untereinander mittels luftführender Verbindungen im Gehäuse ist denkbar.

Um unterschiedliche Druckstufen in den einzelnen Wirkkammern der pneumatischen Funktionseinheit ausbilden zu können, ist es erforderlich, die Funktionseinheit so zu gestalten, dass die Querverbindungen in axialer Richtung untereinander abgedichtet sind. Besonders vorteilhaft wird dies durch eine umlaufende Dichtung an den äußeren Enden der Zylinderkörper erreicht, die die Zylinderkörper gegen das Gehäuse abdichtet.

Wenn in einer besonderen Ausführung der Erfindung auch der äußere Wirkraum des äußeren Zylinderkörpers einen Druckunterschied gegenüber der Umgebung aufweisen soll, so ist auch hier eine Abdichtung gegen die Umgebung erforderlich. Dies geschieht vorteilhaft durch einen Abschlusskörper, zum Beispiel eine Deckplatte, der an der äußeren Stirnseite der im Gehäuse außen liegenden Zylinderkörper angeordnet ist. Besonders vorteilhaft ist der Abschlusskörper gegen den äußeren Zylinderkörper abgedichtet. In einer fortgeführten Ausbildung der Erfindung ist der jeweils äußere Zylinderkörper im Bereich des äußeren axialen Endes gegen das Gehäuse abgedichtet, so dass die Querverbindung des äußeren Zylinderkörpers gegenüber der Umgebung abgedichtet ist. Die Abdichtung der Deckplatte gegen den Zylinderkörper und die Abdichtung des Zylinderkörpers gegen das Gehäuse kann dabei besonders vorteilhaft durch eine einzige umlaufende Dichtung ausgeführt sein.

In einer besonders vorteilhaften Ausführung der Erfindung weist das Gehäuse einen rechteckigen Querschnitt auf. Im Gehäuse ist vorteilhaft eine axiale Mittenbohrung ausgeführt, in die der oder die Zylinderkörper eingepasst sind. Diese Ausführung ist besonders fertigungs- und montagefreundlich.

Durch den erfindungsgemäßen Aufbau der pneumatischen Funktionseinheit können nun ganz einfach eine beliebige Anzahl verschiedener oder auch gleicher Baugruppen, in Form von Zylinderkörpern, umfassend einen Kolben und eine Kolbenstange oder Zylinderkörpern, umfassend ein Ventil, in das Gehäuse eingebracht werden. Durch ein entsprechendes Setzen der Luftverbindungen im Gehäuse zwischen den äußeren Anschlüssen und den Querverbindungen der Zylinderkörper oder auch zwischen verschiedenen Querverbindungen, können die Wirkräume der Zylinderkörper leicht mit der gewünschten Druckluft beschaltet werden.

Da sich die Zylinderkörper zusätzlich in ihrem Aufbau trotz verschiedener Funktionen ähneln, ist eine kostengünstige Fertigung möglich. Durch den modularen Aufbau ist die Montage der Funktionseinheiten leicht auszuführen, die Montagezeiten sind gegenüber bekannten Ausführungen verkürzt.

Die Erfindung soll nachfolgend anhand von Ausführungsbeispielen und den beigefügten Zeichnungen näher erläutert werden.

Es zeigen:
- Figur 1: eine erfindungsgemäße pneumatische Funktionseinheit.
- Figur 2: den Axialschnitt durch eine erfindungsgemäße pneumatische Funktionseinheit zur Steuerung eines nicht linearen Zusammenhangs zwischen sechs Drücken.

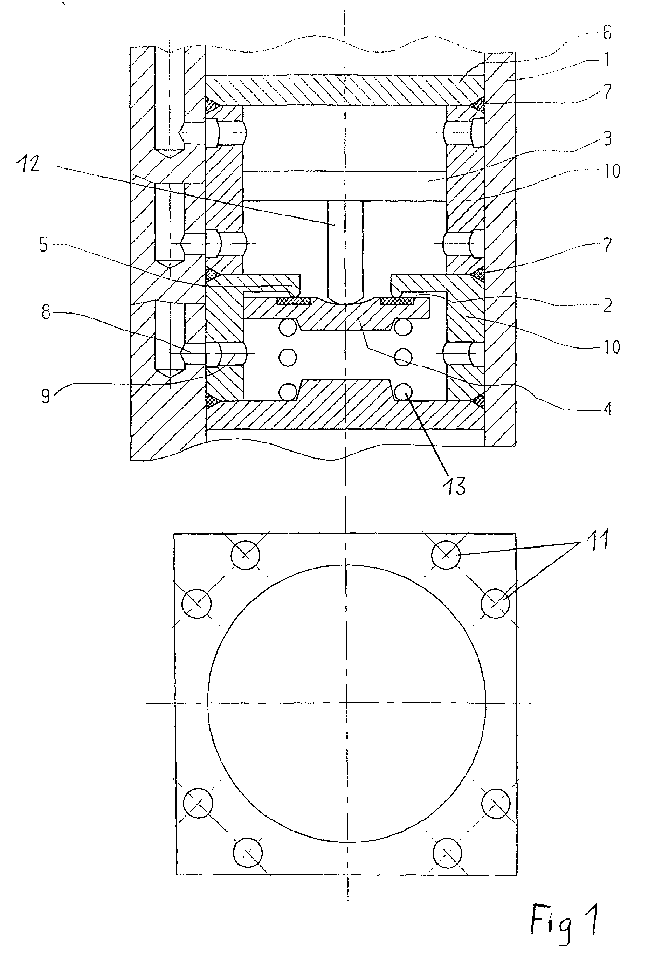

Figur 1 zeigt eine erfindungsgemäße pneumatische Funktionseinheit für Druckluftbremsen. Dabei ist ein Axialschnitt und eine Draufsicht auf die Funktionseinheit dargestellt.

Die Funktionseinheit umfasst ein Gehäuse 1, zwei Zylinderkörper 10, einen Kolben 3 mit einer Kolbenstange 12 im ersten Zylinderkörper und einem Ventilkörper 4 in dem zweiten Zylinderkörper. Der zweite Zylinderkörper ist dabei so ausgeführt, dass er einen Ventilsitz 5 ausbildet. Der erste Zylinderkörper weist auf jeder Seite des Kolbens 3 zwei Querverbindungen auf. Der zweite Zylinderkörper weist ebenfalls zwei Querverbindungen 9 auf. Alle Querverbindungen 9 sind über Verbindungen 8 im Gehäuse 1 mit den äußeren Anschlüssen 11 verbunden. An den äußeren Enden der Zylinderkörper 10 ist jeweils eine Deckplatte 6 angeordnet. Zwischen den beiden Zylinderkörpern 10 und zwischen den Zylinderkörpern 10 und den Deckplatten 6 sind die Zylinderkörper 10 gegen das Außengehäuse 1 umlaufend abgedichtet, so dass die Querverbindungen 9 gegeneinander und gegen die Umgebung abgedichtet sind, und die von den Zylinderkörpern 10 und Deckplatten 6 eingeschlossenen Räume gegen die Umgebung abgedichtet sind.

Das Ventil in dem zweiten Zylinderkörper mit dem Ventilsitz 5 und dem Ventilkörper 4 ist als Stößelventil ausgebildet. Der Ventilkörper 4 ist mit einer Abdichtung 2 gegen den Ventilsitz 5 abgedichtet. Der Ventilkörper 4 ist in Schließrichtung mit einer Druckfeder 13 und in Öffnungsrichtung durch die Kolbenstange 12 belastet.

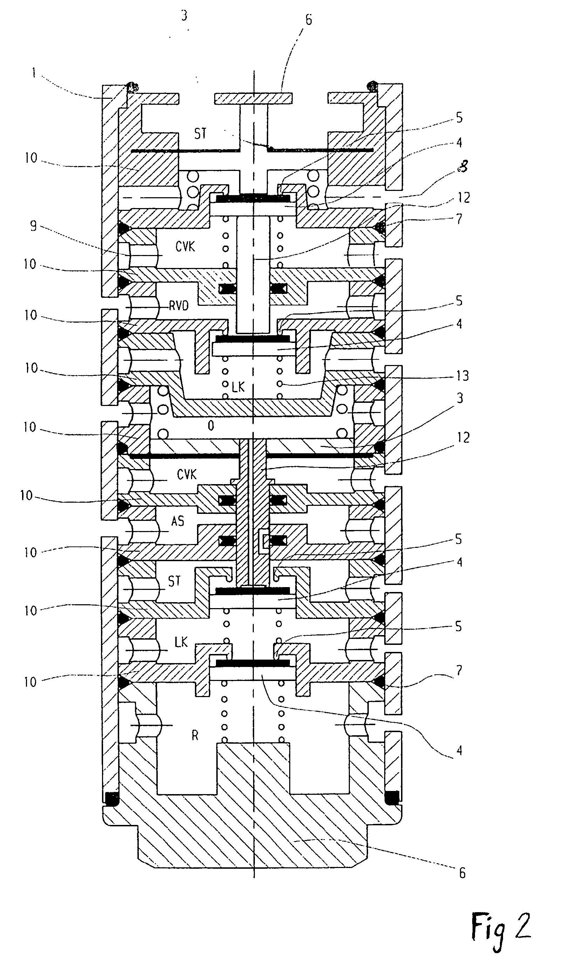

In Figur 2 ist eine erfindungsgemäße pneumatische Funktionseinheit dargestellt, welche einen nichtlinearen Zusammenhang zwischen sechs Drücken ST, CVK, RVD, LK, AS und R steuert. Entsprechende Bauteile sind mit den gleichen Bezugszeichen wie in Figur 1 versehen. Insgesamt sind in ein Gehäuse 1 neun Zylinderkörper 10, zwei Kolben 3 mit Kolbenstangen 12 und vier Ventilsitze 5 mit Druckfedern 13 eingebaut. Die Querverbindungen 9 münden in hier nicht dargestellte luftführende Verbindungen im Gehäuse.

Es ist ersichtlich, dass die genannten Teile bei der Montage in der entsprechenden Reihenfolge in das Gehäuse eingeschoben werden, und allein durch die Deckplatten fixiert und zur Dichtung gebracht werden, woraus sich folgende Vorteile ergeben:
1. Die Einschubteile sind leicht zu fertigende Drehteile
2. Die Baugröße ist durch die axiale Anordnung stark reduziert
3. Die Montagezeit kann gegenüber dreidimensionaler Anordnung stark verkürzt werden.

Es ist erfindungsgemäß damit erstmals möglich eine pneumatische Funktionseinheit in sehr einfacher modularer Form auszuführen und damit insbesondere gegenüber den bisher bekannten komplizierten dreidimensionalen Gebilden Produktions- und Montagekosten einzusparen.

### Bezugszeichenliste

- 1: Gehäuse
- 2: Abdichtung
- 3: Kolben
- 4: Ventilkörper
- 5: Ventilsitz
- 6: Deckplatte
- 7: Abdichtung
- 8: luftführende Verbindung im Gehäuse
- 9: Querverbindung im Zylinderkörper
- 10: Zylinderkörper
- 11: äußerer Anschluss
- 12: Kolbenstange
- 13: Druckfeder

## Patentansprüche

1. Pneumatische Funktionseinheit für Druckluftbremsen
1.1 mit einem Gehäuse (1);
1.2 mit wenigstens einem Kolben (3);
1.3 mit wenigstens einer Kolbenstange (12);
1.4 mit wenigstens einem Ventilkörper (4);
1.5 mit wenigstens einem Ventilsitz (5);
1.6 das Gehäuse (1) weist wenigstens einen äußeren Druckluftanschluss (11) auf;
**gekennzeichnet durch** die folgenden Merkmale:
1.7 das Gehäuse (1) umfasst eine Bohrung mit konstantem Durchmesser;
1.8 die pneumatische Funktionseinheit umfasst wenigstens zwei Zylinderkörper (10), wobei diese im Einbauzustand in die Bohrung des Gehäuses (1) eingepasst sind und wobei die Zylinderkörper (10) im Wesentlichen übereinstimmende Außendurchmesser aufweisen;
1.9 jeweils zwei aneinander angrenzende Zylinderkörper (10) sind an den angrenzenden Flächen entlang des Außenumfangs mittels eines gemeinsamen Dichtelements in axialer Richtung gegen das Gehäuse abgedichtet;
1.10 wenigstens einer der Zylinderkörper (10) ist so gestaltet, dass er wenigstens ein Kolben (3) aufnehmen kann und wenigstens einen Ventilsitz (5) umfasst oder einen solchen aufnehmen kann und zugleich wenigstens einen Ventilkörper (4) aufnehmen kann;
1.11 die Zylinderkörper (10) weisen jeweils wenigstens eine Querverbindung (9) auf, die sich im Inneren der Zylinderkörper (10) zu deren Mantelflächen erstrecken;
1.12 das Gehäuse (1) weist wenigstens eine luftführende Verbindung (8) von wenigstens einer der Querverbindungen (9) der Zylinderkörper(10) zum äußeren Druckanschluss (11) auf.

2. Vorrichtung gemäß Anspruch 1, **dadurch gekennzeichnet, dass** das Gehäuse (1) wenigstens eine luftführende Verbindung (8) zwischen zwei Querverbindungen (9) des Zylinderkörpers (10) aufweist.

3. Vorrichtung gemäß einem der Ansprüche 1 bis 2, **dadurch gekennzeichnet, dass** an der äußeren Stirnseite der im Gehäuse (1) außenliegenden Zylinderkörper (10) ein Abschlusskörper insbesondere eine Deckplatte (6) angeordnet ist.

4. Vorrichtung gemäß Anspruch 3, **dadurch gekennzeichnet, dass** der Abschlusskörper insbesondere die Deckplatte (6) gegen den äußeren Zylinderkörper (10) abgedichtet ist.

5. Vorrichtung gemäß einem der Ansprüche 1 bis 4, **dadurch gekennzeichnet, dass** der jeweils äußere Zylinderkörper (10) im Bereich des äußeren axialen Endes gegen das Gehäuse (1) abgedichtet ist, so dass die Querverbindungen (9) gegenüber der Umgebung abgedichtet sind.

6. Vorrichtung gemäß einem der Ansprüche 1 bis 5, **dadurch gekennzeichnet, dass** das Gehäuse (1) einen rechteckigen Querschnitt aufweist, und der Zylinderkörper (10) in eine axiale Mittenbohrung des Gehäuses (1) eingepasst ist.

7. Vorrichtung gemäß einem der Ansprüche 1 bis 6, **dadurch gekennzeichnet, dass** in das Gehäuse (1) zwei Zylinderkörper (10) eingepasst sind;
7.1 in den ersten Zylinderkörper ist ein Kolben (3) mit einer Kolbenstange (12) eingepasst;
7.2 der zweite Zylinderkörper umfasst einen Ventilsitz (5);
7.3 in den zweiten Zylinderkörper ist ein Ventilkörper (4) geschaltet;
7.4 der erste Zylinderkörper weist auf jeder Seite des Kolbens (3) mindestens eine Querverbindung (9) auf, die über eine luftführende Verbindung (8) im Gehäuse (1) mit einem äußeren Anschluss (11) verbunden ist;
7.5 der zweite Zylinderkörper weist wenigstens eine Querverbindung (9) auf, die über eine luftführende Verbindung (8) im Gehäuse (1) mit einem äußeren Anschluss (11) verbunden ist;
7.6 an dem äußeren Ende der Zylinderkörper (10) ist jeweils eine Deckplatte (6) angeordnet;
7.7 zwischen den beiden Zylinderkörpern (10) und zwischen den Zylinderkörpern (10) und den Deckplatten (6) sind die Zylinderkörper gegen das Außengehäuse (1) umlaufend abgedichtet, so dass die Querverbindungen (9) gegeneinander und gegen die Umgebung abgedichtet sind, und die von den Zylinderkörpern (10) und Deckplatten (6) eingeschlossenen Räume gegen die Umgebung abgedichtet sind.

8. Vorrichtung gemäß Anspruch 7, **dadurch gekennzeichnet, dass** der Ventilsitz (5) und der Ventilkörper (4) ein Stößelventil darstellen;
8.1 der Ventilkörper (4) ist mit einer Abdichtung (2) gegen den Ventilsitz (5) abgedichtet;
8.2 der Ventilkörper (4) ist in Schließrichtung mit einer Druckfeder (13) belastet;
8.3 der Ventilkörper (4) ist in Öffnungsrichtung durch die Kolbenstange (12) belastet.

## Claims

1. Pneumatically operated functional unit for compressed-air brakes, comprising
1.1 a housing (1);
1.2 at least one piston (3);
1.3 at least one piston rod (12);
1.4 at least one valve body (4);
1.5 at least one valve seat (5);
1.6 said housing (1) including at least one external compressed-air port (11);
**characterised by** the following features:
1.7 said housing (1) comprises a bore having a constant diameter;
1.8 said pneumatically operated functional unit includes at least two cylinder bodies (10) that are fitted into said bore in said housing (1) in the built-in condition, with said cylinder bodies (10) presenting substantially congruent external diameters;
1.9 two respectively adjoining cylinder bodies (10) are sealed from said housing along the joining surfaces along the external periphery by means of a common sealing element in an axial direction;
1.10 at least one of said cylinder bodies (10) is so designed that it is capable of accommodating at least one piston (3) and includes or is adapted to accommodate at least one valve seat (5) whilst it is adapted to accommodate, at the same time, at least one valve body (4);
1.11 said cylinder bodies (10) comprise at least one respective transverse communication (9) that extends inside said cylinder bodies (10) towards their envelopes;
1.12 said housing (1) comprises at least one air passage communication (8) from at least one of said transverse communications (9) of said cylinder bodies (10) to said external compressed-air port (11).

2. Device according to Claim 1, **characterised in that** said housing (1) comprises at least one air-passage communication (8) between two transverse communications (9) of said cylinder body (10).

3. Device according to any of the Claims 1 to 2, **characterised in that** said a terminating body, in particular a cover plate (6), is disposed on the external face side of said cylinder bodies (10) located on the outside in said housing (1).

4. Device according to Claim 3, **characterised in that** said terminating body, in particular said cover plate (6) is sealed from said outside cylinder body (10).

5. Device according to any of the Claims 1 to 4, **characterised in that** the respective outside cylinder body (10) is sealed from said housing (1) in the region of the outside axial end such that said transverse communications (9) are sealed from the environment.

6. Device according to any of the Claims 1 to 5, **characterised in that** said housing (1) presents a rectangular cross-section and that said cylinder body (10) is fitted into an axial central bore of said housing (1).

7. Device according to any of the Claims 1 to 6, **characterised in that** two cylinder bodies (10) are fitted into said housing (1);
7.1 that a piston (3) with a piston rod (12) is fitted into the first cylinder body;
7.2 that said second cylinder body comprises a valve seat (5);
7.3 that a valve body (4) is inserted into said second cylinder body;
7.4 said first cylinder body comprises at least one transverse communication (9) on each side of said piston (3), which is connected to an external port (11) via an air-passage communication (8) in said housing (1);
7.5 said second cylinder body comprises at least one transverse communication (9) that is connected via an air-passage communication (8) in said housing (1) to an external port (11);
7.6 a respective cover plate (6) is arranged on the outside end of said cylinder body (10);
7.7 said cylinder bodies are peripherally sealed from said external housing (10) between said two cylinder bodies (10) and said cover plates (6) so that said transverse communications (9) are sealed from each other and from the environment while the spaces enclosed by said cylinder bodies (10) and cover plates (6) are sealed from the environment.

8. Device according to Claim 7, **characterised in that**
8.1 said valve body (4) is sealed from said valve seat (5) by means of a seal (2);
8.2 said valve body (4) is loaded by means of a compression spring (13) along the closing direction;
8.3 said valve body (4) is loaded by said piston rod (12) along the opening direction.

## Revendications

1. Unité fonctionnelle pneumatique pour freins à air comprimé, comprenant
1.1 un carter (1);
1.2 au moins un piston (3) ;
1.3 au moins une tige de piston (12) ;
1.4 au moins un corps de soupape (4) ;
1.5 au moins une siège de soupape (5) ;
1.6 ledit carter (1) renfermant au moins une alimentation extérieure en air comprimé (11);
**caractérisée par** les caractéristiques suivantes :
1.7 ledit carter (1) comprend un perçage à un diamètre constant ;
1.8 ladite unité fonctionnelle pneumatique comprend au moins deux corps de cylindre (10), qui sont encastrés dans ledit perçage dans ledit carter (1) en état monté, auxdits corps de cylindre (10) présentant des diamètres essentiellement congruents ;
1.9 deux corps de cylindre respectifs adjacents (10) sont rendus étanches relativement audit carter le long des surfaces adjacentes le long de la périphérie extérieure moyennant un élément commun d'étanchéité en sens axial ;
1.10 au moins un desdits corps de cylindre (10) est conçu d'une telle manière, qu'il soit apte à recevoir au moins un piston (3) et renferme ou est apte à recevoir au moins une siège de soupape (5), pendant qu'il est apte à recevoir, en même temps, au moins un corps de soupape (4) ;
1.11 lesdits corps de cylindre (10) comprennent au moins une conduite de connexion transversale (9) respective, qui s'étend à l'intérieur desdits corps de cylindre (10) vers leurs enveloppes ;
1.12 ledit carter (1) comprend au moins une conduite de passage d'air (8) à partir d'au moins une desdites conduites de connexion transversales (9) desdits corps de cylindre (10) vers ladite alimentation en air comprimé extérieure (11).

2. Dispositif selon la revendication 1, **caractérisé en ce que** ledit carter (1) comprend au moins une conduite de passage d'air (8) entre deux conduites de connexion transversales (9) dudit corps de cylindre (10).

3. Dispositif selon une quelconque des revendications 1 à 2, **caractérisé en ce qu'**un corps terminant, en particulier une plaque de couverture (6), est disposé sur la face extérieure desdits corps de cylindre (10), qui se trouve du côté extérieur dans ledit carter (1).

4. Dispositif selon la revendication 3, **caractérisé en ce que** ledit corps terminant, en particulier ladite plaque de couverture (6), est rendu étanche relativement audit corps de cylindre extérieur (10).

5. Dispositif selon une quelconque des revendications 1 à 4, **caractérisé en ce que** le corps de cylindre respectif extérieur est rendu étanche relativement audit carter (1) dans la zone de l'extrémité axiale extérieure d'une telle manière, que lesdites conduites de connexion transversales (9) soient rendues étanches relativement à l'environnement.

6. Dispositif selon une quelconque des revendications 1 à 5, **caractérisé en ce que** ledit carter (1) présente une section transversale rectangulaire et **en ce que** ledit corps de cylindre (10) est encastrés dans un perçage axiale central dudit carter (1).

7. Dispositif selon une quelconque des revendications 1 à 6, **caractérisé en ce que** deux corps de cylindre (10) sont encastrés dans ledit carter (1);
7.1 **en ce qu'**un piston (3) à une tige de piston (12) est encastré dans ledit premier corps de cylindre ;
7.2 **en ce que** ledit deuxième corps de cylindre comprend une siège de soupape (5) ;
7.3 **en ce qu'**un corps de soupape (4) est inséré dans ledit deuxième corps de cylindre ;
7.4 que ledit premier corps de cylindre comprend au moins une conduite de connexion transversale (9) de chaque côté dudit piston (3), qui est relié à un alimentation extérieure (11) via une conduite de passage d'air (8) dans ledit carter (1);
7.5 que ledit deuxième corps de cylindre comprend au moins une conduite de connexion transversale (9), qui est reliée via une conduite de passage d'air (8) dans ledit carter (1) à un alimentation extérieure (11) ;
7.6 une plaque de recouvrement (6) respective est disposée à l'extrémité extérieure dudit corps de cylindre (10) ;
7.7 lesdits corps de cylindre sont rendus étanches à la périphérie relativement audit carter extérieur carter (10) entre lesdits deux corps de cylindre (10) et lesdites plaques de recouvrement (6) d'une telle manière, que lesdites conduites de connexion transversales (9) soient rendues étanches l'une de l'autre et relativement à l'environnement, pendant que les espaces renfermées par lesdits corps de cylindre (10) et lesdites plaques de recouvrement (6) sont rendues étanches relativement à l'environnement.

8. Dispositif selon la revendication 7, **caractérisé en ce**
8.1 que ledit corps de soupape (4) est rendu étanche relativement à ladite siège de soupape (5) moyennant une garniture d'étanchéité (2) ;
8.2 que ledit corps de soupape (4) est mis en charge moyennant un ressort de pression (13) le long de la direction de fermeture ;
8.3 que ledit corps de soupape (4) est mis en charge par ledit tige de piston (12) le long de la direction d'ouverture.
